(19) Europäisches Patentamt
European Patent Office
Office européen des brevets

(11) EP 0 849 932 B1

(12) **EUROPEAN PATENT SPECIFICATION**

(45) Date of publication and mention of the grant of the patent:
**07.05.2003 Bulletin 2003/19**

(51) Int Cl.[7]: **H04N 1/193**, H04N 1/047

(21) Application number: **97203908.5**

(22) Date of filing: **12.12.1997**

(54) **A scanner system with automatic compensation of positioning errors**

Abtastsystem mit automatischer Positionsfehlerkompensation

Système de balayage avec compensation automatique d'erreur de position

(84) Designated Contracting States:
**CH DE FR GB IT LI NL**

(30) Priority: **19.12.1996 NL 1004831**

(43) Date of publication of application:
**24.06.1998 Bulletin 1998/26**

(73) Proprietor: **Océ-Technologies B.V.**
**5914 CC Venlo (NL)**

(72) Inventor: **Classens, Wilhelmus Peter Johannes**
**5811 AP Castenray (NL)**

(74) Representative: **Hanneman, Henri W., Dr. et al**
**Océ-Technologies B.V.**
**Patents & Information**
**St. Urbanusweg 43**
**P.O. Box 101**
**5900 MA Venlo (NL)**

(56) References cited:
**EP-A- 0 284 043**
**US-A- 4 661 699**
**US-A- 4 724 330**
**US-A- 5 117 295**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to an apparatus for optically scanning a document and in so doing generating digital image data corresponding to local optical densities of the document, such apparatus frequently being termed a scanner, and more particularly a scanner provided with a fixed glass plate, one side of which defines an original plane, transport means for transporting the said document in a sub-scanning direction in the original plane, at least two linear sensors situated in a main scanning direction, each comprising an array of opto-electrical converters (CCD), and each provided with a lens which images on the sensor a linear observation area situated in the original plane, the observation areas of the sensors being substantially in line and partially overlapping at the ends.

In a scanner of this kind, a document for scanning is moved in one direction by the said transport means while the sensors together scan a stationary linear area, which area is directed perpendicularly to the direction of transport of the document, so that the document is scanned two-dimensionally. The direction of the area scanned by the scanners is generally termed the main scanning direction and the transport direction is the sub-scanning direction.

In order to ensure that the document is scanned completely during the scanning operation, the sensors and their lenses are usually so disposed that their observation areas overlap somewhat at the ends. In practice it so happens it is impossible so to mount the sensors that their observation areas are exactly in contact and remain exactly in contact despite impacts, such as, for example, during transport of the scanner. In the overlapping area the two sensors deliver digital image data and a choice has to be made as to which data are passed and which are not, a marginal condition being that the transition should not be visible in the final image.

The literature describes various techniques to deal with the transition between two sensors. For example, US Patent No. 4 657 745 describes a scanner provided with a movable glass plate on which the document for scanning is placed. A narrow black line is provided in the direction of transport on the glass plate outside the area for documents and when the glass plate is in the home position the black line is situated in the overlapping parts of the observation areas of the two sensors. In an adjustment procedure, the image of the black line is searched in the image data of the two sensors and its position is used, in generating digital image data during scanning, as the transition from one sensor to the other. The black line does not necessarily have to lie in the same plane as the document, but can, for example, be lower, e.g. at the bottom of the glass plate. In that case, the result of the adjustment procedure is corrected for the parallax occurring, by shifting the transition, for both sensors, a predetermined number of pixels from their end.

In US Patent 4 870 505, which also relates to a scanner with a movable glass plate to receive a document, a test pattern having lines in the direction of transport and triangles is disposed on the movable glass plate outside the area for documents. This pattern is scanned in an adjustment procedure and the relative positions and the skew positions are calculated from the points of intersection of the test pattern with the observation areas of the separate sensors. The connecting points in the sensors are calculated by means of these data. Also, a correction can be carried out for a connection error in the transport direction between two adjoining sensors and their skewing, by buffering the image data of some scan lines during scanning and sourcing the outgoing image data from different image lines.

The above patents always make use of a movable glass plate on which a separate test pattern is provided outside the area reserved for the document for scanning. In contrast, there are also scanners which do not have such a transport system but in which the document for scanning is conveyed by pairs of rollers over a narrow stationary glass plate mounted in the main scanning direction. This construction is simpler while maintaining accuracy and is certainly preferable for large document formats. The above-mentioned adjustment techniques can only be used for this construction by making the test patterns in the form of documents, test cards. In that case it is difficult to ensure that the pattern is disposed sufficiently accurately at the correct position.

To solve this problem, US Patent No. 5 117 295 proposes to replace the test pattern with an aligning element situated between the lenses and the original plane at a short distance from the latter in a position such that its perpendicular projection on to the original plane is situated within the overlapping ends of two adjoining observation areas. This aligning element is formed by a thin wire in the transport direction disposed beneath the glass plate.

In the digital data of the sensors associated with the said two observation areas, the pixels which reproduce the aligning element are used to determine the transition from one sensor to the next. This is explained by reference to Figs. 1A and 1B.

Fig. 1A is a sketch showing the principle of a scanner with two CCD sensors S1 and S2, on each of which part of the glass plate 1 (for the sake of simplicity the glass thickness is not shown) is projected by a lens L1 and L2 respectively. The part of the glass plate projected on to a sensor is also termed the observation area O1 and O2 respectively of said sensor. The direction of transport for the document D for scanning on the top of the glass plate 1 is perpendicular to the drawing plane. In the overlapping part of the observation areas O1 and O2 of the sensors, there is disposed beneath the glass plate 1 an aligning element 2 in the form of a wire perpendicular to the drawing plane. Aligning element 2 is thus detected by both sensors S1 and S2. The projection P of the aligning element 2 on to the plane of the document D for scanning (the original plane) is selected as the transition point where the digital image data from sensor S1 and the digital image data from sensor S2 are fitted together. The image data from the ends of the sensors outside the position corresponding to point P are not used.

Fig. 1 B shows the right-hand part of the image projected on to the sensor S1. During an adjustment procedure, the middle 3 of the image of the aligning element 2 on the sensor is searched in the measurement data and that point (pixel) is used as a reference. From point 3 a fixed number N of pixels is counted to find the transition point P (4). The number N can be determined experimentally. It can also be preselected, whereafter the distance of the aligning element from the glass plate is adjusted until the required effect is obtained. During the scanning of documents, the measurement data from sensor elements between point 4 and end 5 of the projected image, and also the end of the sensor, are discarded. The remaining measured values are added to those from the other sensor, which has undergone the same procedure for determining the connecting point.

In this way, an accurate connection of the digital image from the various sensors can be obtained even for a scanner having a transport system without a moving glass plate. The advantage of this is that any change of the mechanical adjustment of the sensors can be corrected automatically, digitally, without any mechanical action by a maintenance engineer.

However, this applies only to a distortion in the adjustment in the direction of the sensors themselves, the main scanning direction. A displacement of the sensors resulting in their observation areas no longer being in line, i.e. if the sensors are displaced relatively to one another in the sub-scanning direction, cannot be determined in the above-described manner, let alone corrected. Such displacement, however, is equally possible, for example if the apparatus is moved. It is therefore desirable to be able to automatically compensate for such displacement as well.

The object of the invention is to provide means to allow such automatic compensation. To this end, in an apparatus according to the preamble, according to the invention as claimed in claim 1 an aligning element is provided which has a shape such that for each sensor in whose observation area it is situated the aligning element has a width in the main scanning direction which increases or decreases-continuously as a function of the sub-scanning direction.

As a result, it is possible to determine from the measurement data of a sensor what position the observation area of that sensor has in the sub-scanning direction, since there is a fixed relationship between the measured width of the aligning element and said position. In an adjustment procedure, the centre of the projection of the aligning element on to the sensor is still used to determine the transition point, but in addition the mutual distance of the two observation areas in the sub-scanning direction is determined from the width of the projection.

A suitable shape is one in which the width tapers linearly with the sub-scanning direction, in other words the projection of the aligning element on the sensor is a triangle. Non-linear shapes are also possible, e.g. a bent or curved configuration. In this way the accuracy can be increased in a specific area.

In one embodiment, the aligning element is a body of revolution, a narrow rod of tapering width mounted cantilever-fashion beneath the glass plate. A flat body situated in a plane beneath the glass plate and mainly parallel thereto is also suitable. Another suitable embodiment of the aligning element is an assembly of two linear elements, e.g. two stretched wires or two thin rods, so fixed that their projections on to the original plane extend at an angle to one another. For example, one element can be situated in the sub-scanning direction and the other in a direction forming an acute angle therewith. Another example is two elements which extend each at an acute angle, of equal value but of different sign, to the sub-scanning direction and thus form a symmetrical figure.

The aligning element can be mounted cantilever-fashion, but can also be fixed against the bottom of the glass plate. The thickness of the glass plate then provides the required distance from the original plane.

The apparatus according to the invention is provided with means for determining, from the image data generated in relation to the aligning element, mutual position differences in the sub-scanning direction between two adjoining sensors and is also provided with digital means for so delaying the digital data from at least one sensor that the said position differences are eliminated. In one embodiment, said means comprise a number of series-connected shift registers each of a length of one scan line, and a selection circuit, which selection circuit on the basis of the measured position differences selects one of the said shift registers to deliver image data from the associated sensor. The selection circuit divides the measured position differences by the distance between two consecutive scan lines and thus calculates the number of scan lines between the image data from the two sensors. By selecting the shift register corresponding to the calculated number the correct scan lines are connected to one another.

A method of compensating for connection errors as claimed in claim 13 is also disclosed.

The invention will now be explained with reference to the following Figures. In the Figures, like references denote like parts.

Fig. 1A is a diagram of a scanner with two sensor systems;

Fig. 1B shows part of the image projected on one of the sensors;

Fig. 2 is a side elevation showing the principle of an apparatus according to the invention;

Figs. 3 and 4 show an aligning body used in the apparatus of Fig. 2;

Fig. 5 is a description of a procedure for determining correction values;

Fig. 6 is a diagram showing a circuit for compensating for deviations in the adjustment of the sensors.

Fig. 2 is a side elevation showing the principle of an apparatus according to the invention. A copyboard 20 and a glass plate 1 together form an original plane over which a document for scanning can be transported along the sensor system, consisting of the lenses L and the sensors S, each comprising a CCD array. These CCD arrays are disposed in the direction perpendicular to the drawing plane and in extension of one another. The document for scanning (not shown) is transported from left to right between two driven roller pairs 21, 22 and 23, 24 respectively. A pressure-application plate 25 presses the document against the glass plate 1. A tubular lamp 26 illuminates the document from the bottom directly and by means of a reflector 27, while the pressure-application plate 25, which is painted white, forms a second reflector which reflects into the optical system any light passing through the document.

The line 29 indicates the optical path between the scanned part of the document and the sensors S, through the lenses L. This optical path contains an aligning body 2, which in this exemplified embodiment is formed by a thin rod having a tapering diameter, just beneath the glass plate 1, in the direction of transport of the document.

The front elevation of the apparatus will be explained with reference to Fig. 1A. In this exemplified embodiment, the sensor system comprises two sensors S1, S2, each having a lens L1, L2. Each of the sensors senses through its lens a linear area of the document. These linear areas, which have the width of one pixel, e.g. approximately 60 μ, are hereinafter referred to as the observation area and indicated by O1 and O2 respectively. As shown in Fig. 1A, the observation areas O1 and 02 overlap each other to a small extent. The body 2 is disposed at a short distance beneath the glass plate 1 in the overlapping part of the fields of view of each of the two sensors. The distance between the body 2 and the original plane is so selected that the aligning body is still imaged sufficiently sharply on the sensors to enable the edges thereof to be recognised.

The aligning body 2 is shown to an enlarged scale in Fig. 3. The ends 31 and 32 are cylindrical with a substantially constant diameter, and the middle part 33 has a diameter which tapers continuously from the diameter of end 31 to the diameter of end 32. In this example it is purely conical, but the taper could also be curved. The middle part is used for the adjustment as will be explained hereinafter. Real values for the diameters of the ends are 1 and 4 mm respectively, while the apex angle of the cone described by the middle part 33 is for example 60 degrees. Of the parts 31, 32 and 33 shown in Fig. 3, only the part 33 is essential. The other parts need not necessarily be present but are added here for mounting purposes. Other usable shapes for the aligning body are, for example, a flat element or an assembly of wires extending in intersecting directions, preferably situated in a plane parallel to the glass plate 1. The aligning body can also be formed by a pattern of, for example, paint applied to the bottom of the glass plate. The only important factor is that the image of the aligning body detected by the sensors should have two recognisable positions in the main scanning direction, said positions having a previously known relationship with positions in the sub-scanning direction.

To construct the scanner apparatus, the sensors are accurately mounted in position by suitable means which are not described in detail here. After the adjustment, the observation areas of the two sensors are substantially in extension of one another and overlapping in the main scanning direction, in such manner that the aligning body is situated mainly opposite the middle of the overlapping part of the observation areas and the middle part of the aligning body is intersected approximately half-way by the observation areas. Impacts to the apparatus, e.g. on moving it or by disposing it on an uneven floor, may distort this adjustment of the sensors to some extent. Usually, the observation areas are then displaced over a short distance, so that they no longer connect up in the sub-scanning direction and their overlap is different. Rotation is also possible, but in practice this is so small that no correction is required. Fig. 4 shows the condition after a displacement of the sensors, Fig. 4 also showing the aligning body 2 and the two observation areas O1 and O2. The points of intersection R1,1 and R1,2 of O1 with the edges of the aligning body 2 and the points of intersection R2,1 and R2,2 of O2 with the edges of the aligning body 2 are also indicated. As a result of the imaging of the observation areas on the sensors these points coincide with individual CCD elements of the sensors and since the CCD elements are distributed uniformly also coincide with coordinates within the sensors.

The procedure for determining the correction values required to compensate for any deviations in the adjustment of the sensors is shown in Fig. 5. A scan is made without any document so that only the aligning body 2 is visible against the white pressure-application plate 25. The coordinates of the points of intersection R1,1, R1,2, R2,1 and R2,2 are first determined in step 52 from the digital image data from the sensors.

In step 54 the centrepoints M1 = (R1,2 + R1,1) /2 and M2 = (R2,2 + R2,1)/2 are calculated and stored in a memory. By means of these points, the connecting points where the image data of sensor S1 and the image data of sensor S2 are connected to one another during the scanning of documents are calculated by adding, from point M1 and M2 respectively, a number of pixels (CCD elements) predetermined experimentally, to the middle of the sensor. This is necessary because the aligning body does not lie in the original plane and the sensors detect the aligning body from two directions at an angle, so that parallax occurs. In this way, point P (Fig. 1A) is reached, which forms the perpendicular projection of the centre of the aligning body 2 on to the original plane. This point is chosen as the connecting point for the image data from the sensors S1 and S2 respectively. The point P is indicated by P1 and P2 respectively in the image data from the sensors S1 and S2 respectively. Otherwise, of course, any other point situated in the free field of view of the two sensors can be selected as the connecting point. Determination thereof in the image data is similar.

In step 56, the widths W1 = R1,2 - R1,1 and W2 = R2,2 - R2,1 of the projection of the aligning body 2 on the sensors S1 and S2 respectively are calculated. These widths are converted to a mutual distance A in accordance with the formula

$$A = 0.5 * (W2 - W1) / \tan a$$

where a is half the apex angle of the conical part of the aligning body 2. In scanning documents, the image data from the sensor S1 or S2 must be delayed by a time interval corresponding to the transport of the document over the distance A (the choice of the sensor is determined by the sign of A). The value A is expressed in units of the distance between the scan lines and converted to two values A1 relating to sensor S1, and A2 relating to sensor S2. The values A1 and A2 are also stored in a memory.

That completes the procedure.

Fig. 6 is a diagram showing a circuit for compensating deviations in the adjustment of the sensors S1 and S2, based on the correction factors calculated in accordance with the above description.

The sensors S1 and S2 are each connected to an analogue/digital converter 61 and 62 respectively, and deliver analogue serial image data thereto. The analogue image data are converted to digital serial image data by the converters 61, 62. Converter 61 is connected to a switch 63 and converter 62 to a switch 64. During the procedure for determining the correction values as described with reference to Fig. 5, the switches 64 and 65 are in the state shown in Fig. 6 and connect the sensors to an analysis circuit 65 which performs the said procedure. The analysis circuit 65 is connected to a control circuit 66 which will be described hereinafter, and delivers thereto the correction values P1, P2, A1 and A2. The control circuit 66 is provided with a memory for the temporary storage of the correction values.

After the procedure for determining the correction values has been performed, the switches 63 and 64 are set to their other mode, in which they connect the converters 61 and 62 to a switching unit 67 which connects one of the converters to a combining circuit 71 and the other converter to a bank 68 of series-connected shift registers. The shift registers have the length of one scan line of the sensors. The individual shift registers are connected to a multiplexer 69. Together with the multiplexer 69 the shift registers form a delay circuit having a delay selectable in units of one scan line spacing. The state of the switching unit 67 determines which of the two sensor signals is delayed.

The multiplexer 69 is in turn connected to the control circuit 66 and its output is connected to combining circuit 71, which is also connected to a processing device (not described in detail) for the digital image data, e.g. a printing device 72.

During the scanning of a document, the digitised image data from one of the sensors S1 and S2 are delayed by passing them through the shift register bank 68, the multiplexer 69 passing the image data from one of the shift registers under the control of the control circuit 66 in such manner that the image data passed relate to the same position in the sub-scanning direction on the document, despite any displacement of the sensors S1 and S2.

The scan lines thus delayed are fed by the multiplexer 69 to the combining circuit 71, which combines them with the scan lines from the other sensor, received directly from the switching unit 67. In these conditions, combining circuit 71 removes from the scan lines of both sensors the image data originating from the end, overlapped by the other sensor, to the position P1 and P2 respectively, and combines the remaining image data to form a complete image line. In these conditions, the combining circuit 71 is constructed in manner known per se so that the scan lines incoming simultaneously from the two sensors are placed in the correct time sequence. The resulting image lines are fed consecutively to a processing circuit.

It should be noted here that the term "circuit" does not mean solely hardware, but also can mean a microprocessor loaded with suitable software.

In the above-described exemplified embodiment only one aligning body is provided in the overlapping area of the observation areas associated with the sensors. Of course it is also possible to provide, just outside the area for scanning, aligning bodies in the free ends of the complete field of view formed by the combination of the observation areas. In this way, for each of the observation areas, position determination in the sub-scanning direction becomes possible for both ends, so that it is possible to determine from this any skewing of the sensors so that it is also possible to correct the same.

In the above description, the apparatus is equipped with two sensors, but of course an apparatus of this kind can be provided with more than two sensors which always have an observation area overlapping the observation area of the adjoining sensors. In that case, aligning bodies are provided in all the overlapping areas.

Although the invention has been explained with reference to the exemplified embodiment described it is not restricted thereto. It is clear to the skilled man that other embodiments are also possible within the scope of the claims.

## Claims

**1.** Apparatus for optically scanning a document and in so doing generating digital image data corresponding to local optical densities of the document, comprising

a fixed glass plate, one side of which defines an original plane,
transport means for transporting the said document in a sub-scanning direction in the original plane,
at least two linear sensors situated in a main scanning direction, each comprising an array of opto-electrical converters and each provided with a lens which images on the sensor a linear observation area, situated in the original plane, the observation areas of the sensors being substantially in line and partially overlapping at the ends in the main scanning direction,
an aligning element situated between the lenses and the original plane at a short distance from the latter in a position such that its perpendicular projection on to the original plane is situated within the overlapping ends of two adjoining observation areas,

**characterised in that**

the aligning element has a shape such that for each sensor in whose observation area it is situated the aligning element has a width in the main scanning direction which increases or decreases continuously as a function of the sub-scanning direction.

**2.** Apparatus according to claim 1, wherein the said width of the aligning element tapers linearly with the sub-scanning direction.

**3.** Apparatus according to claim 1, wherein the said width of the aligning element tapers in a curved configuration with the sub-scanning direction.

**4.** Apparatus according to claim 1, wherein the aligning element is a body of revolution having an axis extending in the sub-scanning direction and mounted beneath the glass plate.

**5.** Apparatus according to claim 1, wherein the aligning element is a flat body situated in a plane beneath the glass plate and substantially parallel thereto.

**6.** Apparatus according to claim 1, wherein the aligning element comprises an assembly of two linear elements so fixed that their projections on to the original plane extend at an angle to one another.

**7.** Apparatus according to any one of claims 1 to 6, wherein the aligning element is fixed at one end without contact with the glass plate.

**8.** Apparatus according to any one of claims 1 to 6, wherein the aligning element is fixed against the underside of the glass plate.

**9.** Apparatus according to claim 1, provided with means for determining, from the image data generated in relation to the aligning element, mutual position differences in the sub-scanning direction between two adjoining sensors.

**10.** Apparatus according to claim 9, wherein the means for determining the said position differences determine the width of the aligning element in the image data of each of the said adjoining sensors and calculate from the difference between these widths the mutual position differences in the sub-scanning direction.

**11.** Apparatus according to claim 9 or 10, also provided with digital means for so delaying the digital data from at least one sensor that the said position differences in the sub-scanning direction are eliminated.

**12.** Apparatus according to claim 11, wherein said digital means comprise a number of series-connected shift registers each of a length of one scan line, and selection means, which selection means on the basis of the measured position differences select one of the said shift registers to deliver image data from the associated sensor.

**13.** A method of compensating for connection errors between digital image data generated by two linear sensors situated next to one another in the direction of their length, each comprising an array of opto-electrical converters,
in an apparatus for optically scanning a document and in so doing generating digital image data corresponding to local optical densities of the document, which apparatus is provided with

a fixed glass plate, one side of which defines an original plane, and
transport means for transporting the said document in a sub-scanning direction in the original plane,
said at least two linear sensors situated with the direction of their length in a main scanning direction, each provided with a lens which images on the sensor a linear observation area, situated in the original plane, the observation areas of the sensors being substantially in line and partially overlapping at the ends in the main scanning direction,

which method is **characterised by**

a) making available an aligning element having a width in the main scanning direction which increases or decreases continuously as a function of the sub-scanning direction, at a position situated between the lenses and the original plane, at a short distance from the latter, in such manner that its perpendicular projection on to the original plane is situated within the overlapping ends of two adjoining observation areas;
b) carrying out a test scan;
c) determining the detected width of the aligning element in the image data generated by each one of two adjoining sensors observing said aligning element, respectively, during the test scan;
d) determining any position differences in the sub-scanning direction of said two adjoining sensors from any difference In the respective detected widths in the image data of said two adjoining sensors and the shape of the aligning element; and
e) during a normal scan, by delaying digital image data from at least one of the said two adjoining sensors, compensating for position differences in the sub-scanning direction of said two adjoining sensors as determined during the test scan.

## Patentansprüche

1. Vorrichtung zum optischen Abtasten eines Dokuments und dabei zur Erzeugung digitaler Bilddaten, die lokalen optischen Dichten des Dokuments entsprechen, mit
einer festen Glasplatte, deren eine Seite eine Vorlagenebene definiert,
einer Transporteinrichtung für den Transport des Dokuments in einer Unterabtastrichtung in der Vorlagenebene,
wenigstens zwei linearen, in einer Hauptabtastrichtung angeordneten Sensoren, die jeweils eine Zeile optoelektrischer Wandler aufweisen und jeweils mit einer Linse versehen sind, die ein in der Vorlagenebene liegendes lineares Beobachtungsgebiet auf den Sensor abbildet, wobei die Beobachtungsgebiete der Sensoren im wesentlichen in einer Linie ausgerichtet sind und einander an den Enden in der Hauptabtastrichtung teilweise überlappen,
einem Ausrichtelement, das zwischen den Linsen und der Vorlagenebene in einem geringen Abstand zu der letzteren in einer solchen Position angeordnet ist, daß seine rechtwinklige Projektion auf die Vorlagenebene innerhalb der überlappenden Enden von zwei aneinander angrenzenden Beobachtungsgebieten liegt,
**dadurch gekennzeichnet, daß**
das Ausrichtelement eine solche Form hat, daß es für jeden Sensor, in dessen Beobachtungsgebiet es liegt, eine Breite in der Hauptabtastrichtung hat, die als eine Funktion der Unterabtastrichtung stetig zu- oder abnimmt.

2. Vorrichtung nach Anspruch 1, bei der die Breite des Ausrichtelements sich in der Unterabtastrichtung linear verjüngt.

3. Vorrichtung nach Anspruch 1, bei der die Breite des Ausrichtelements sich in der Unterabtastrichtung in einer gekrümmten Konfiguration verjüngt.

4. Vorrichtung nach Anspruch 1, bei der das Ausrichtelement ein Rotationskörper ist, dessen Achse in der Unterabtastrichtung verläuft und der unterhalb der Glasplatte montiert ist.

5. Vorrichtung nach Anspruch 1, bei der das Ausrichtelement ein flacher Körper ist, der in einer Ebene unterhalb der Glasplatte und im wesentlichen parallel dazu angeordnet ist.

6. Vorrichtung nach Anspruch 1, bei der das Ausrichtelement eine Konstruktion aus zwei linearen Elementen aufweist, die so befestigt sind, daß ihre Projektionen auf die Vorlagenebene winklig zueinander verlaufen.

7. Vorrichtung nach einem der Ansprüche 1 bis 6, bei der das Ausrichtelement an einem Ende ohne Berührung mit der Glasplatte befestigt ist.

8. Vorrichtung nach einem der Ansprüche 1 bis 6, bei der das Ausrichtelement an der Unterseite der Glasplatte anliegend befestigt ist.

9. Vorrichtung nach Anspruch 1, mit Mitteln zur Bestimmung gegenseitiger Positionsdifferenzen in der Unterabtastrichtung zwischen zwei aneinander angrenzenden Sensoren anhand der in bezug auf das Ausrichtelement erzeugten Bilddaten.

10. Vorrichtung nach Anspruch 9, bei der die Mittel zur Bestimmung der Positionsdifferenzen die Breite des Ausrichtelements in den Bilddaten jedes der aneinander angrenzenden Sensoren bestimmen und aus der Differenz zwischen diesen Breiten die gegenseitigen Positionsdifferenzen in der Unterabtastrichtung berechnen.

**11.** Vorrichtung nach Anspruch 9 oder 10, die auch eine digitale Einrichtung zur Verzögerung der digitalen Daten von wenigstens einen der Sensoren aufweist, derart, daß die Positionsdifferenzen in der Unterabtastrichtung eliminiert werden.

**12.** Vorrichtung nach Anspruch 11, bei der die digitale Einrichtung eine Anzahl von in Serie verbundenen Schieberegistern, die jeweils die Länge einer Abtastzeile haben, und eine Auswahleinrichtung aufweist, die anhand der gemessenen Positionsdifferenzen eines der Schieberegister zur Ausgabe von Bilddaten des zugehörigen Sensors auswählt.

**13.** Verfahren zum Kompensieren von Anschlußfehlem zwischen digitalen Bilddaten, die von zwei benachbart zueinander in Richtung ihrer Länge angeordneten linearen Sensoren erzeugt werden, die jeweils eine Zeile optoelektrischer Wandler aufweisen, in einer Vorrichtung zum optischen Abtasten eines Dokuments und dabei zur Erzeugung digitaler Bilddaten entsprechend lokalen optischen Dichten des Dokuments, welche Vorrichtung aufweist:

eine feste Glasplatte, deren eine Seite eine Vorlagenebene definiert, und

eine Transporteinrichtung für den Transport des Dokuments in einer Unterabtastrichtung in der Vorlagenebene,

wobei die wenigstens zwei linearen Sensoren, die mit ihrer Längsrichtung in einer Hauptabtastrichtung angeordnet sind, jeweils eine Linse aufweisen, die ein in der Vorlagenebene liegendes lineares Beobachtungsgebiet auf den Sensor abbildet, wobei die Beobachtungsgebiete der Sensoren im wesentlichen auf eine Linie ausgerichtet sind und einander an den Enden in Hauptabtastrichtung teilweise überlappen,
welches Verfahren **gekennzeichnet** ist:

a) Bereitstellen eines Ausrichtelements mit einer in der Hauptabtastrichtung gemessenen Breite, die als eine Funktion der Unterabtastrichtung stetig zuoder abnimmt, in einer Position zwischen den Linsen und der Vorlagenebene, in einem geringen Abstand zu der letzteren, derart, daß seine rechtwinklige Projektion auf die Vorlagenebene innerhalb der überlappenden Enden zweier aneinander angrenzender Beobachtungsgebiete liegt,

b) Ausführen wenigstens einer Testabtastung,

c) Bestimmen der gemessenen Breite des Ausrichtelements in den Bilddaten, die während der Testabtastung von jedem der beiden aneinander angrenzenden Sensoren erzeugt werden, die das Ausrichtelement beobachten,

d) Bestimmen etwaiger Positionsdifferenzen in Unterabtastrichtung der beiden aneinandergrenzenden Sensoren anhand etwaiger Differenzen der jeweils in den Bilddaten der beiden aneinandergrenzenden Sensoren gemessenen Breiten und anhand der Form des Ausrichtelements und

e) während einer normalen Abtastung, Kompensieren der während der Testabtastung bestimmten Positionsdifferenzen in Unterabtastrichtung zwischen den beiden aneindergrenzenden Sensoren durch Verzögern der digitalen Bilddaten von wenigstens einem der beiden aneinandergrenzenden Sensoren.

## Revendications

**1.** Appareil de balayage optique d'un document et, ce faisant, de génération de données d'images numériques correspondant à des densités optiques locales du document, comprenant :

une plaque de verre fixe, dont un côté définit un plan original;
des moyens de transport pour le transport dudit document dans une direction de balayage secondaire dans le plan original;
au moins deux capteurs linéaires situés dans une direction de balayage principale, chacun comprenant un réseau de convertisseurs optoélectriques et muni chacun d'une lentille qui forme sur le capteur l'image d'une zone d'observation linéaire, située dans le plan original, les zones d'observation des capteurs étant sensiblement en ligne et se chevauchant partiellement aux extrémités dans la direction de balayage principale;
un élément d'alignement situé entre les lentilles et le plan original à courte distance de ce dernier en position telle que sa projection perpendiculaire sur le plan original soit située dans les extrémités chevauchantes de deux zones d'observation adjacentes;

**caractérisé en ce que**

l'élément d'alignement a une forme telle que, pour chaque capteur dans la zone d'observation duquel il se trouve, l'élément d'alignement ait une largeur dans la direction de balayage principale qui augmente ou diminue en continu en fonction de la direction de balayage secondaire.

**2.** Appareil selon la revendication 1, dans lequel ladite largeur de l'élément d'alignement s'amincit linéairement avec la direction de balayage secondaire.

**3.** Appareil selon la revendication 1, dans lequel ladite largeur de l'élément d'alignement s'amincit en configuration incurvée avec la direction de balayage secondaire.

**4.** Appareil selon la revendication 1, dans lequel l'élément d'alignement est un corps de révolution ayant un axe s'étendant dans la direction de balayage secondaire et monté au-dessous de la plaque de verre.

**5.** Appareil selon la revendication 1, dans lequel l'élément d'alignement est un corps plat situé dans un plan au-dessous de la plaque de verre et sensiblement parallèle à celle-ci.

**6.** Appareil selon la revendication 1, dans lequel l'élément d'alignement comprend un ensemble de deux éléments linéaires fixés de sorte que leurs projections sur le plan original forment un angle l'une avec l'autre.

**7.** Appareil selon l'une quelconque des revendications 1 à 6, dans lequel l'élément d'alignement est fixé à une extrémité sans contact avec la plaque de verre.

**8.** Appareil selon l'une quelconque des revendications 1 à 6, dans lequel l'élément d'alignement est fixé contre la face inférieure de la plaque de verre.

**9.** Appareil selon la revendication 1, muni de moyens de détermination, à partir des données d'images générées en relation avec l'élément d'alignement, de différences de position mutuelles dans la direction de balayage secondaire entre deux capteurs adjacents.

**10.** Appareil selon la revendication 9, dans lequel les moyens de détermination desdites différences de position déterminent la largeur de l'élément d'alignement dans les données d'images de chacun desdits capteurs adjacents et calculent, à partir de la différence entre ces largeurs, les différences de position mutuelles dans la direction de balayage secondaire.

**11.** Appareil selon la revendication 9 ou 10, muni également de moyens numériques pour retarder les données numériques d'au moins un capteur de sorte que lesdites différences de position dans la direction de balayage secondaire soient éliminées.

**12.** Appareil selon la revendication 11, dans lequel lesdits moyens numériques comprennent un certain nombre de registres de décalage raccordés en série, chacun d'une longueur d'une ligne de balayage, et des moyens de sélection, qui, sur la base des différences de position mesurées, sélectionnent un desdits registres de décalage pour délivrer des données d'images à partir du capteur associé.

**13.** Procédé de compensation d'erreurs de raccordement entre des données d'images numériques générées par deux capteurs linéaires situés l'un près de l'autre dans la direction de leur longueur, comprenant chacun un réseau de convertisseurs optoélectriques, dans un appareil de balayage optique d'un document et, ce faisant, de génération de données d'images numériques correspondant à des densités optiques locales du document, ledit appareil étant pourvu :

d'une plaque de verre fixe, dont un côté définit un plan original; et
de moyens de transport pour le transport dudit document dans une direction de balayage secondaire dans le plan original;
lesdits au moins deux capteurs linéaires étant situés avec leur direction en longueur dans une direction de balayage principale, chacun étant muni d'une lentille qui forme sur le capteur une image d'une zone d'observation linéaire, située dans le plan original, les zones d'observation des capteurs étant sensiblement en ligne et se chevauchant partiellement aux extrémités dans la direction de balayage principale,

ledit procédé étant **caractérisé en ce que** :

a) on met en oeuvre un élément d'alignement ayant une largeur dans la direction de balayage principale qui augmente ou diminue en continu en fonction de la direction de balayage secondaire, dans une position située entre les lentilles et le plan original, à une courte distance de ce dernier, de sorte que sa projection perpendiculaire sur le plan original soit située dans les extrémités chevauchantes de deux zones d'observation adjacentes;
b) on effectue un balayage d'essai;
c) on détermine la largeur détectée de l'élément d'alignement dans les données d'images générées par chacun des deux capteurs adjacents observant ledit élément d'alignement, respectivement, pendant le balayage d'essai;
d) on détermine des différences de position quelconques dans la direction de balayage secondaire desdits deux capteurs adjacents à partir d'une différence quelconque dans les largeurs détectées respectives des données d'images desdits deux capteurs adjacents et la forme de l'élément d'alignement; et

e) au cours d'un balayage normal, en retardant les données d'images numériques venant d'au moins un desdits deux capteurs adjacents, on compense les différences de position dans la direction de balayage secondaire desdits deux capteurs adjacents comme telles que déterminées au cours du balayage d'essai.

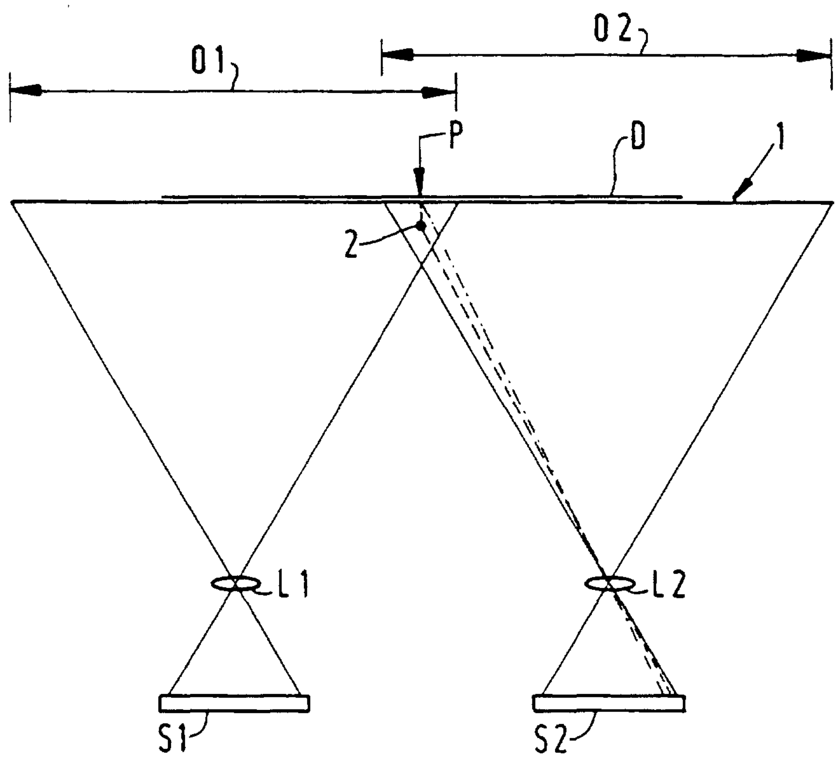


FIG. 1A

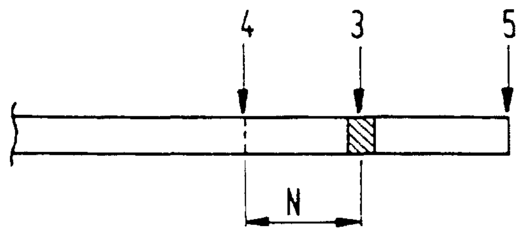


FIG. 1B

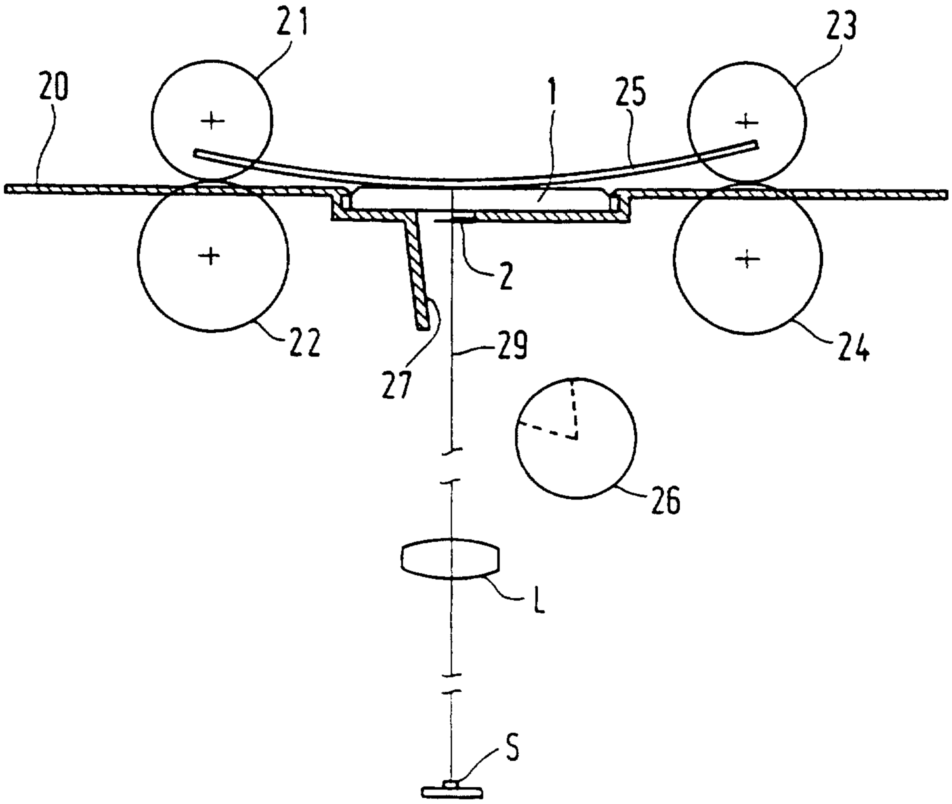


FIG. 2

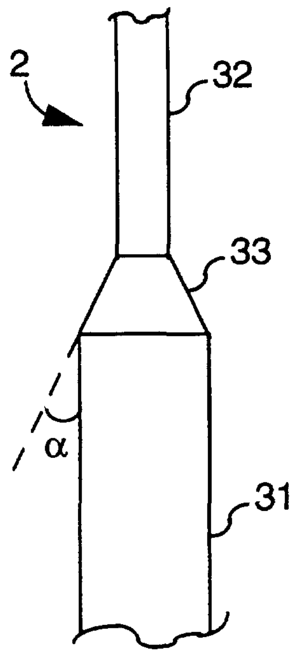


FIG. 3

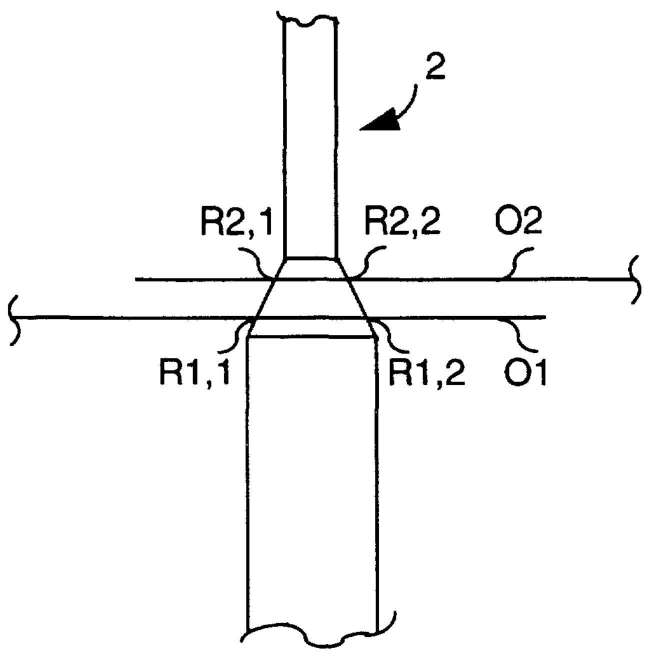


FIG. 4

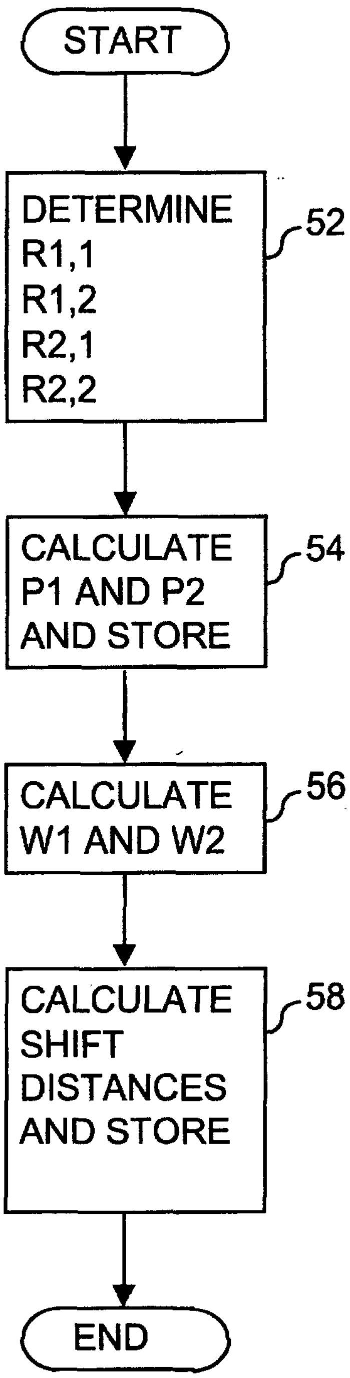
START
DETERMINE
R1,1
R1,2
R2,1
R2,2
52
CALCULATE
P1 AND P2
AND STORE
54
CALCULATE
W1 AND W2
56
CALCULATE
SHIFT
DISTANCES
AND STORE
58
END

FIG. 5

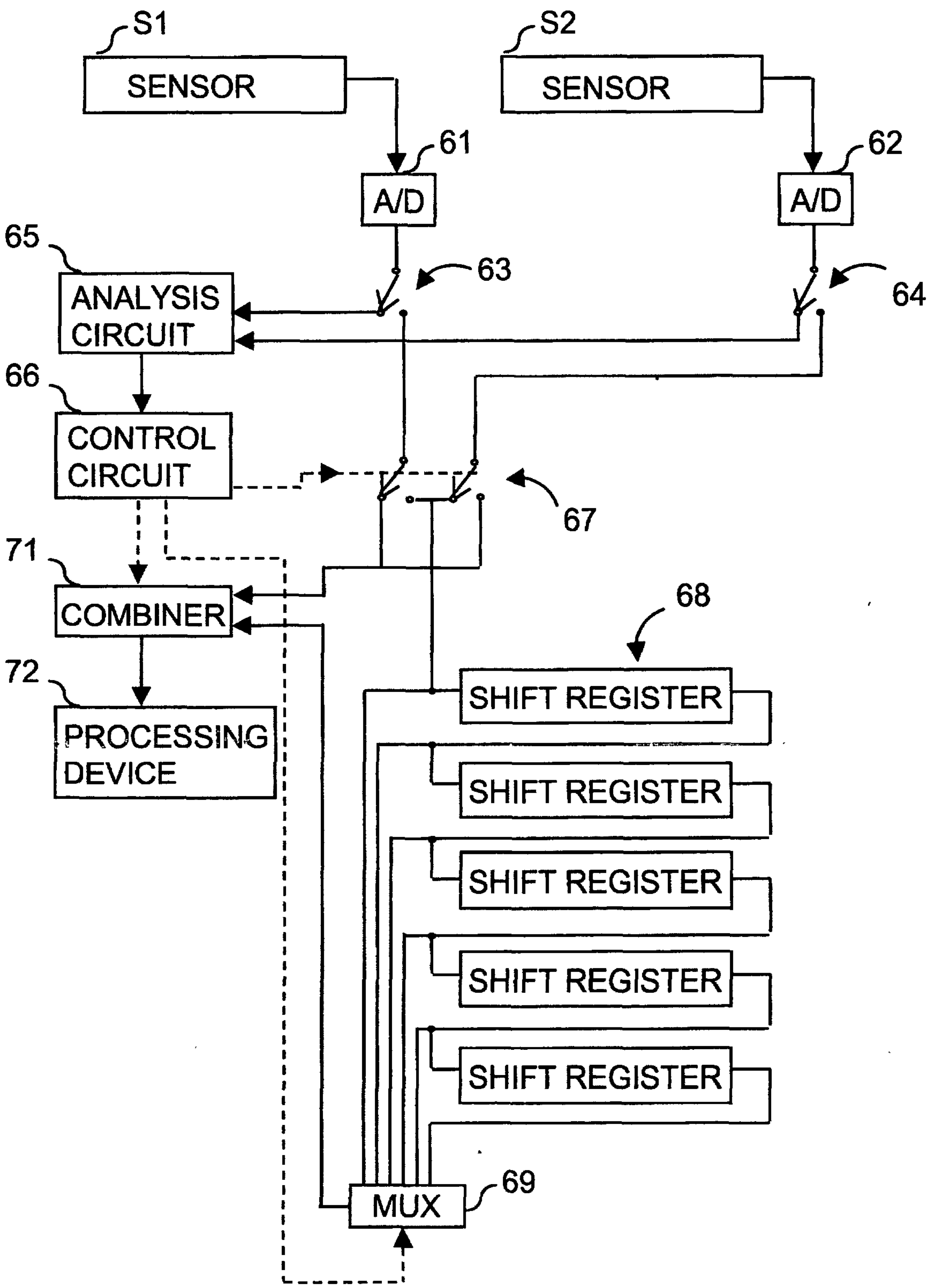
S1
SENSOR
S2
SENSOR
61
A/D
62
A/D
65
ANALYSIS CIRCUIT
63
64
66
CONTROL CIRCUIT
67
71
COMBINER
68
72
PROCESSING DEVICE
SHIFT REGISTER
SHIFT REGISTER
SHIFT REGISTER
SHIFT REGISTER
SHIFT REGISTER
MUX
69

FIG. 6